# EUROPÄISCHE PATENTSCHRIFT

(11) **EP 1 467 157 B1**
(45) Veröffentlichungstag und Bekanntmachung des Hinweises auf die Patenterteilung: **15.03.2006**
(21) Anmeldenummer: 03008406.5
(22) Anmeldetag: 11.04.2003
(51) Int. Cl.: F24J 2/04

(54) **Fassadenelement**
Façade element
Elément de façade

(43) Veröffentlichungstag der Anmeldung: 13.10.2004
(73) Patentinhaber: Karl Steiner AG, 8050 Zürich (CH)
(72) Erfinder: Lauppi, Rolf, CH 8005 Zürich (CH)
(74) Vertreter: Révy von Belvárd, Peter

(56) Entgegenhaltungen:
- EP-A- 0 335 261
- DE-A- 3 008 610
- DE-A- 3 024 170
- DE-A- 3 604 076
- DE-C- 19 655 125
- GB-A- 2 273 151

## Beschreibung

Die Erfindung bezieht sich auf ein Fassadenelement für ein Gebäude mit einer aus einzelnen solchen Fassadenelementen mit Aussenwand und einer einem Raum zuzuwendenden Innenwand zusammengesetzten Fassadenwand, wobei mindestens ein Teil der Fassadenelemente wenigstens eine Leitung aufweist.

Alte Gebäude haben in den meisten Fällen Fassaden mit massiven, einschichtigen und aus homogenen Materialien (Naturstein, Backstein, Holz) aufgebaute Wände. Der grosse Vorteil dieser Konstruktionen besteht darin, dass sie die passiven solaren Gewinne nutzen können. Anderseits sollen aber auch die heute geforderten Wärmedämmwerte erzielt werden. Diese Wärmedämmwerte versucht man durch massiv erhöhte Konstruktionsstärken, z.B. aus Backstein, zu erreichen. Tatsächlich lösten mit zunehmender Anforderung an Komfort und Behaglichkeit und dem damit einhergehenden Energieverbrauch neue Konstruktionen im Fassadenbau die traditionellen Konstruktionen ab. Die mehrschichtigen Aufbauten dominieren heute den Markt.

Als Folge der sich verschärfenden Bestimmungen im Bereich des Schadstoffausstosses bei Gebäudeheizung- und Kühlung werden aber die Anforderungen an die Gebäudehülle stetig wachsen. Die Dämmstärken haben in den vergangenen Jahren zugenommen und werden dies auch zukünftig tun. Ein Kosten/Nutzenoptimum wird die Dämmstärken bestimmen. Dabei wird der Energiepreis eine entscheidende Rolle spielen. Rein physikalisch wird sich ein "annäherndes" Optimum einstellen, wenn die Einsparungen im Bereich von 1-2% zum physikalisch Machbaren liegen. Die Fensterflächen werden dabei im allgemeinen reduziert, um die Energieabstrahlung zu vermindern.

Diese Haltung steht in zwei wichtigen Punkten im Kontrast zu wichtigen Möglichkeiten der solaren Energienutzung einerseits und zur Energienutzung anderseits. Denn mit der Minimierung der Fensterflächen geht ein Mehrbedarf an künstlicher Beleuchtung - sprich elektrischer Energie einher. Der gravierendere zweite Punkt - durch die hohen Dämmstärken werden die Wärmeverluste zeitlich erheblich reduziert - die möglichen passiven solaren Energiegewinne jedoch verhindert. Zusammen mit den kleinen Fenstern können immer kleinere solare Gewinne realisiert werden.

Ein weiterer Nachteil bekannter Konstruktionen liegt darin, dass im allgemeinen die Energieversorgung und/oder -überwachung zentral - meist in einem Kellergeschoss - untergebracht ist, d.h. dort befindet sich ein Zentralheizungs- und/oder Warmwasserkessel, von dem aus die Wärme, nicht zuletzt mit erheblichen Leitungsverlusten, auf die einzelnen Räume verteilt wird (ohne dass der einzelne Bewohner eines Raumes auf die zentrale Einstellung viel Einfluss nehmen könnte). Wird etwa ein Gebäudeteil durch Sonnenwärme erhitzt, wogegen ein anderer im Schatten liegt, so ist eine individuelle Anpassung an die Bedürfnisse nur schwer möglich. Dort, im Untergeschoss, wird im allgemeinen auch die Sicherheitseinheit untergebracht sein, um etwa zu gewissen Zeiten Beleuchtungsgeräte ein- oder auszuschalten, Torsperren zu aktivieren etc. Eine individuelle Anpassung einer solchen Sicherheitsschaltung an die Bedürfnisse eines Einzelnen (etwa zum Bedienen der Raumbeleuchtung während Urlaubsabwesenheit etc.) ist damit kaum möglich.

Ein Fassadenelement ist auch schon aus der DE-C-195 20 141 bekannt geworden. Dabei handelte es sich aber eigentlich um ein an einer Fassade anzubringendes Fensterelement für Schwimmhallen, bei dem die Leitung nur so weit mit Energie versorgt werden musste, um Kondensationswasser zu verdampfen; für eine Raumbeheizung reichte dies nicht, und da es sich eigentlich auch nur um ein Fensterelement handelte, musste die Leitung während der Montage desselben in einen dafür vorgesehenen Hohlraum eingelegt und aussen, im Schwenkbereich des Fensters flexibel, bis zur Steuerung weitergeführt werden.

Fassadenelemente der gattungsgemässen Art sind auch schon aus der GB-A-2 273 151, der EP-A-0 335 261 oder der DE-A-30 08 610 bekannt geworden. In allen diesen Fällen handelt es sich um Elemente, die zusammen mit anderen Elementen, insbesondere einem Fensterelement, einen Raum abdecken können. Ein Fensterelement ist nötig, weil die aus diesen Dokumenten bekannten Elemente selbst keine natürliche Beleuchtung eines Raumes durch Tageslicht ermöglichten.

Der Erfindung liegt die Aufgabe zugrunde, eine individuellere Anpassung zu erleichtern und dabei ein Fassadenelement zu schaffen, das mit geringen Kosten an einem Bauskelett montiert werden kann.

Diese Aufgabe löst man erfindungsgemäss durch die kennzeichnenden Merkmale des Anspruches 1.

Damit ergeben sich überraschende Vorteile. Denn nicht nur, dass die oben skizzierte Aufgabe gelöst wird, so dass dem Benützer eines Raumes die ihm zugehörigen Einrichtungen in dem den Raum abschliessenden Fassadenelement bereitgestellt werden, es ergibt sich auch beim Bau eine einfachere Montage, indem die einzelnen Fassadenelemente nur an einem Grundrahmen befestigt und die Leitungen über die Kupplungen in der entsprechenden Weise angeschlossen werden. Damit entfällt auch viel Installationsarbeit, und das Gebäude kann kostengünstiger errichtet werden. Zusätzlich entfällt mindestens ein Teil, im allgemeinen der Grossteil, derjenigen Einrichtungen, die früher im Kellergeschoss untergebracht waren, und dieses steht für andere Zwecke, wie die Unterbringung von Garagenplätzen etc., zur Verfügung.

Das Fassadenelement weist mindestens ein, insbesondere zu öffnendes, Fenster auf, und beinhaltet worzugsweise mindestens einen Motor für die Betätigung eines Sonnen- oder Blendschutzes und/oder für das zu öffnende Fenster. Während nämlich bei klimatisierten Räumen im allgemeinen kaum zu öffnende Fenster vorgesehen sind, garantiert die Anordnung eines zu öffnenden Fensters eine natürliche Be- und Entlüftung des dahinterliegenden Raumes über eine grosse Zeitspanne des Jahres. Bei einfachen Benutzeransprüchen an Lüftung und Klima kann dann sogar mindestens zeitweise auf eine aktive Lüftung verzichtet und damit Energie eingespart werden, wobei der Benutzer es in der Hand hat, natürliche oder allenfalls auch künstliche Belüftung zu wählen. Dazu erlaubt die Anordnung eines Motors (im weitesten Sinne als bewegendes Element) die Betätigung von Sonnenblenden etc. Gewünschtenfalls kann aber der Motor auch zum Öffnen des Fensters selbst benützt werden, beispielsweise als Sicherheitseinrichtung, um in Zeiten der Abwesenheit eines Benützers dessen Anwesenheit vorzutäuschen.

Eine weitere vorteilhafte Ausgestaltung besteht darin, dass das Fassadenelement einen eine äussere Auffangfläche für Sonnenlicht aufweisenden Sonnenenergie-Wandler, wie Sonnenkollektor oder Sonnenzellen, aufweist, der an wenigstens eine der Leitungen angeschlossen ist, wobei bevorzugt eine Verteileinrichtung vorgesehen ist, um einen allfälligen Energieüberschuss über die mindestens eine Kupplung weiterzuverteilen. Die Fassade wird so mindestens zum Teil zu einem Kollektor für thermische Energie. Zusätzlich kann das Fassadenelement aber auch die Funktionen der Energieverarbeitung und Bereitstellung bzw. allenfalls der Weiterverteilung nicht benötigter Energie, allenfalls über einen Anschluss an das Netz und/oder an andere, weniger bestrahlte Räume, übernehmen.

Die Anordnung kann die mindestens eine Leitung entlang der Innenfläche des Fassadenelementes aufweisen. Nicht zuletzt aus ästhetischen Gründen ist es aber bevorzugt, wenn es wenigstens über einen Teil seiner Fläche doppelwandig mit einem Hohlraum ausgeführt ist, in dem die wenigstens eine Leitung verläuft. Dies kann zusätzliche Vorteile insoweit haben, als dadurch der Wärmedämmwert des zugehörigen Raumes erhöht wird. Ist zusätzlich noch der oben erwähnte Wandler für Sonnenenergie an der Aussenfläche vorgesehen, so ergibt sich die Vergrösserung des Wärmedämmwertes praktisch ohne Verlust an Sonnenenergie.

Die mindestens eine Leitung kann in vielen Fällen eine für eine Raumbeheizung und/oder für Sicherheitseinrichtungen dimensionierte elektrische Leitung sein. Es ist jedoch vorteilhaft, wenn sie wenigstens eine Fluidleitung umfasst, wobei vorzugsweise diese Leitung mit einer am Fassadenelement angebrachten, beispielsweise ein Lüftungsgerät umfassenden, Temperiereinrichtung und/oder Feuchtigkeitsregeleinrichtung verbunden ist und insbesondere an einen am Fassadenelement vorgesehenen Wärmetauscher angeschlossen ist. Damit kann die thermische Energieversorgung für den Wärmehaushalt, die Kühlung, die Lüftung und in dem Fassadenelement vorgesehen werden, wobei für eine individuelle Einstellung entweder eine Einrichtung zur fixen Voreinstellung vorgesehen wird, vorzugsweise jedoch - wie auch für andere Zwecke - die mindestens eine Leitung mit einer an der Innenwand des Fassadenelementes angeordneten Einstelleinrichtung verbunden ist, so dass der Benützer von innen her die Energiezufuhr seinen Bedürfnissen anpassen kann. Die zugehörige Einstelleinrichtung, die auch eine Einstelleinrichtung für eine Sicherheitsschaltung (Anschalten von Licht, Abgabe von Geräuschen um die Anwesenheit des Benützers vorzutäuschen etc.) sein kann, ist entweder über eine eigene Kupplung an die mindestens eine Leitung des Fassadenelementes angeschlossen oder kann auch an der Innenfläche des Fassadenelementes bereits integriert sein.

Gerade Glaskonstruktionen sind im Brandfall deshalb gefährdet, weil das Glas unter der Einwirkung von Hitze leicht bricht und damit den Zutritt von Sauerstoff in den Raum freigibt. Im weiteren Verlauf schlagen dann Flammen in das jeweils höhere Stockwerk und erhitzen dessen Glasfassade von aussen. Besonders bei Gebäudewinkeln und nahe gegenüberliegenden Gebäudeteilen wird deshalb ein Brandschutz mindestens empfohlen. Dies lässt sich im Rahmen der Erfindung in idealer Weise dadurch verwirklichen, an von der Innenwand abgekehrter Seite mindestens ein Brandschutzvorhang angeordnet ist. Wenn hier von der "der Innenwand abgekehrten Seite" die Rede ist, so soll damit zum Ausdruck gebracht werden, dass der Brandschutzvorhang ebenso im Hohlraum zwischen zwei Glasscheiben, wie auch an der Aussenfläche vorgesehen werden kann (wobei letzteres in vielen Fällen bevorzugt sein wird).

Die Erfindung bezieht sich auch auf ein Gebäude mit mindestens einem Fassadenelement der oben besprochenen Art, wobei die mindestens eine Leitung des Fassadenelementes über die Kupplung mit einer im Gebäude untergebrachten Mess- und Steuer- bzw. Regeleinheit verbunden werden kann. Damit können gewisse Grundeinstellungen, zentral vorgenommen werden, ohne dass dafür ein grosser Platzbedarf erforderlich ist, wie es auch möglich ist, etwa Elektrizitäts- und andere Zähler an dieser Stelle unterzubringen, um das Ablesen ohne Störung der Raumbenutzer zu ermöglichen. Dabei ist im Rahmen der Erfindung das Wort "zentral" in einem breiten Sinne zu verstehen, denn es kann vorteilhaft sein, wenn die Mess- und Steuer- bzw. Regeleinheit mit Gruppen von Fassadenelementen im wesentlichen gleicher Bedingungen verbunden ist, d.h. entweder ist eine einzige, gruppenweise organisierte solche Einheit vorgesehen (z.B. für die Gruppe der Fassadenelemente an der Nord- und an der Südseite) oder es sind gruppenweise eigene, für die jeweilige Gruppe zentrale, Mess- und Steuer- bzw. Regeleinheiten vorgesehen.

Weitere Einzelheiten der Erfindung ergeben sich an Hand der nachfolgenden Beschreibung eines in der Zeichnung dargestellten bevorzugten Ausführungsbeispieles, wobei
- Fig. 1: eine äussere Seitenansicht eines Gebäudes aus einzelnen Fassadenmodulen darstellt, an dem die Erfindung verwirklicht wird;
- Fig. 2: eine Ansicht der Aussenfläche eines einzelnen Fassadenmoduls ist, dessen Aussenwand im unteren Teil der Figur weggerissen ist;
- Fig. 3: eine Ansicht der Innenfläche eines einzelnen Fassadenmoduls ist; die
- Fig. 4 und 5: jeweils Vertikalschnitte nach den Linien IV-IV bzw. V-V der Fig. 2 sind; und die
- Fig. 6 und 7: jeweils Horizontalschnitte nach den Linien VI-VI bzw. VII-VII der Fig. 2 darstellen, wobei Fig. 7 eine Druntersicht auf die Unterseite der eingebauten Geräte bietet.

Ein Gebäude G besitzt eine Fassade F, die aus einzelnen modulartigen Fassadenelementen 1, insbesondere mit Fenstern bzw. ganz aus Glas, zusammengesetzt ist. Unter der Fassade F befinden sich die Kellerräumlichkeiten K. Die einzelnen Fassadenelemente 1 sind, was die Energieversorgung betrifft, im wesentlichen "autark", d.h. sie sind für die Versorgung der dahinter gelegenen Räumlichkeiten jeweils voll ausgerüstet, wie noch an Hand der weiteren Figuren erläutert wird. Jedes Fassadenelement wird bei der Erstellung des Gebäudes G an ein zuvor erstelltes Strukturskelett aus Stahlbeton oder Stahl gehängt oder eingesetzt, worauf seine Energieversorgungseinrichtungen (im allgemeinsten Sinne) mit Versorgungsleitungen 20, 20a über Kupplungen angeschlossen werden, womit nicht nur der Bau erstellt ist, sondern gleichzeitig auch die lnstallationen fix, fertig vorliegen.

Die Versorgungsleitungen 20, 20a (z.B. für elektrischen Strom, für die Übermittlung von Signalen bzw. für die Leitung von Heiz- und/oder Kühlmittel) könnten an sich entlang der vertikalen Stützen des Skeletts zur Anbringung der Elemente 1 vertikal erstrecken. Sie würden damit nahe der Oberfläche der Fassade verlaufen und wären damit der jeweiligen Aussentemperatur stark ausgesetzt. Zwar hat man in der Vergangenheit versucht, diesen Einfluss bei Leitungen für den Flüssigkeitstransport durch entsprechend starke Isolation und/oder durch Leitungsbeheizung auszugleichen, doch sind damit höhere Kosten und höherer Energieaufwand verbunden. Deshalb ist es bevorzugt, wenn die Leitungen 20, 20a im Inneren des Gebäudes G etwa entlang der Decke oder in einem Hohlboden verlaufen, wie dies später noch gezeigt wird. Dies bringt es mit sich, dass im bevorzugten Fall die Kupplungen für den Anschluss der Geräte der Fassadenelemente 1 untereinander sowie an eine Versorgungsleitung 20 bzw. 20a gegen die Seite des Raumes gerichtet sein werden.

Durch die Erfindung kann das Kellergeschoss K von verschiedenen, bisher dort untergebrachten Einrichtungen befreit werden. Dennoch mag es zweckmässig sein, am - im vorliegenden Ausführungsbeispiel als Flachdach ausgebildeten - Dach des Gebäudes G Energiegewinnungssysteme bzw. Sonnenenergie-Wandler, wie Sonnenkollektor und/oder Sonnenzellen, 22 vorzusehen und deren Energie (da sie nun einmal zentral für das Gebäude G vorgesehen sind) zentral im Keller K in einem zugehörigen Speicher 23 zu speichern. Im Falle von Sonnenkollektoren wird dies ein mit festem oder flüssigem Medium arbeitender Wärmespeicher sein (könnte auch ein Kältespeicher sein), im Falle von voltaischen Sonnenzellen mag ein elektrischer Akkumulator als Speicher 23 vorgesehen werden. Ein solcher Speicher nimmt nicht viel Raum ein, so dass das Kellergeschoss etwa auch für Parkplätze etc. genutzt werden kann.

Eine weitere Möglichkeit besteht darin, dass zwar die einzelnen Fassadenelemente 1 jeweils auch Sensoren - beispielsweise für die Stärke der auf ein bestimmtes Fassadenelement fallenden Sonnenlichtes, für die Aussentemperatur etc. - besitzen, dass aber gewissen Daten für das Gebäude G zentral über eine sogenannte MSR-Einrichtung 16a eingegeben werden, die an sich an einem beliebigen Ort des Gebäudes G, vorteilhaft aber im Kellergeschoss K untergebracht ist und beispielsweise mit Mess- und Regeleinheiten (16 in den folgenden Figuren) über eine Kupplung anschliessbar ist. So kann die MSR-Einrichtung über eine erste Leitung 16a' beispielsweise mit den südseitigen Fassadenelementen 1 verbunden sein, über eine Leitung 16a" mit den ostseitigen usw. Es kann aber auch sein, dass es Temperatur- oder Feuchtigkeitsunterschiede über die Höhe des Gebäudes G gibt, in welchem Falle auch obere und untere Gruppen von Fassadenelementen 1 über eine gesonderte Leitung mit der MSR-Einrichtung 16a verbunden werden können, so dass jeweils Gruppen von Fassadenelementen 1 mit im wesentlichen gleichen Umweltbedingungen über eine gesonderte Leitung mit der zentralen MSR-Einheit 16a verbunden werden.

Natürlich wäre es an sich möglich, für jede dieser Verbindungen eine eigene Kupplung vorzusehen, doch vereinfacht sich der Anschluss, wenn etwa sämtliche elektrischen Verbindungen, wie für die Versorgung, für die Verbindung der Mess- und Regeleinheiten 16, 16a und/oder für die Sicherheit (Alarmsystem mit Anwesenheitsdetektor, Programm für die Einschaltung von Licht oder Ton oder zur Betätigung von Jalousien bei Abwesenheit des Bewohners) mittels einer gemeinsamen, mehrpoligen Kupplungseinrichtung angeschlossen werden.

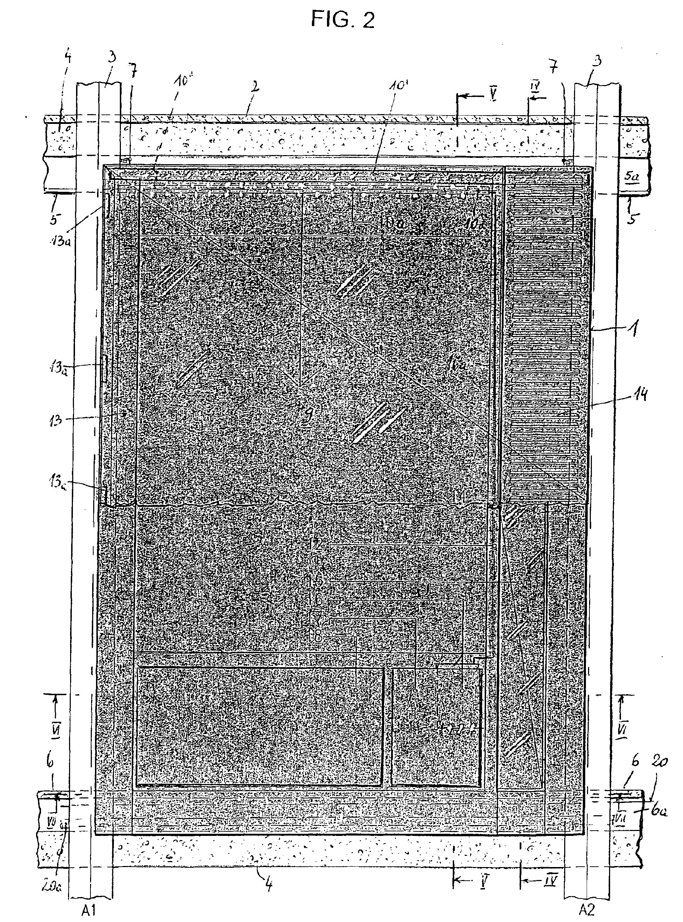

Aus Fig. 2 ist der Aufbau des Strukturskelettes ersichtlich. Es weist vertikale Steher 3 auf, die matrizenartig in gleichmässigen Abständen so angeordnet sind, dass sich Felder A1, A2 ... An ergeben. Diese Steher 3, im allgemeinen aus Stahlbeton, gegebenenfalls aber auch aus anderem Material, wie Stahl, tragen horizontale Geschossdecken 4, die so ausgebildet sein können, wie die oben in Fig. 2 gezeigte, d.h. mit einem unmittelbar darüber angebrachten, vorzugsweise schwimmenden, Estrich 2, oder (bevorzugt) wie es an Hand des unteren Deckenelementes 4 gezeigt ist, mit einem Hohlboden 6, der somit zusammen mit der Decke 4 einen Hohlraum 6a zum Unterbringen von Leitungen etc. umschliesst. Es ist aber auch durchaus möglich, die oben und unten in Fig. 2 gezeigten Deckenkonstruktionen miteinander abwechseln zu lassen, so dass der Hohlraum 6a die Leitungen für den oberen, durch das Fassadenelement 1 abgedeckten Raum bzw. für den Anschluss an die elektrischen Einrichtungen dieses Fassadenelementes 1, und gleichzeitig auch die für das daruntergelegene Fassadenelement aufnimmt. Die Leitungen können aber auch gewünschtenfalls in einem Hohlraum 5a untergebracht werden, der vom Deckenelement 4 und einer in einem Abstand von dieser abgehängten Decke 5 gebildet wird. Dieser Hohlraum kann gewünschtenfalls aber auch dazu benutzt werden, um ihn mit Klimageräten des Fassadenelementes 1 zu verbinden, wobei dann die abgehängte Decke 5 in bekannter Weise mit Öffnungen versehen ist, was auch auf die Schallisolierung einen positiven Einfluss hat.

Wie ersichtlich, besitzen die vertikalen Steher 3 Aufhängeeinrichtungen 7, die beispielsweise etwa V-förmig ausgebildet sind, um mit dem Fassadenelement 1 verbundene Zapfen aufzunehmen. Die Aufnahmeeinrichtung kann aber auch in an sich beliebiger Weise ausgebildet sein, beispielsweise in den Steher 3 versenkt sein, statt von diesem vorzuragen. Bei der Ausführung nach Fig. 2 ist nur ein Paar oberer Aufhängungen vorgesehen; unten hingegen überragt das Fassadenelement 1 die obere Fläche der Gebäudecke 4, kann aber gewünschtenfalls dort auch in einer Nut festgehalten sein. Ebenso ist es möglich, die V-förmigen Aufhängungen an der Unterseite derart anzubringen, dass ein Einsetzen und allenfalls Verschliessen von entsprechenden unteren Zapfen des Fassadenelementes 1 möglich ist.

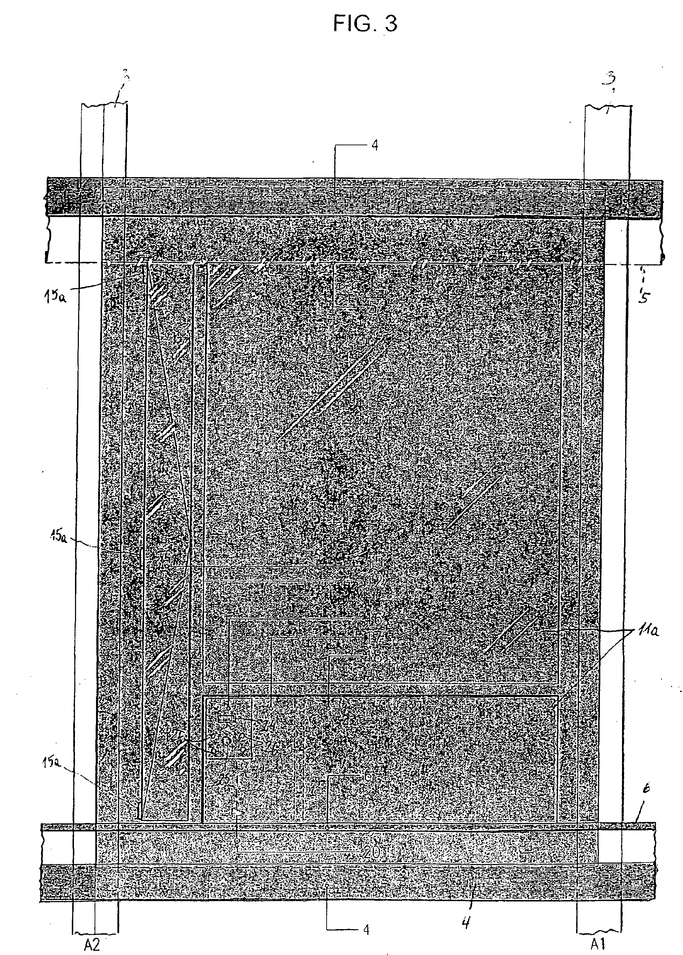

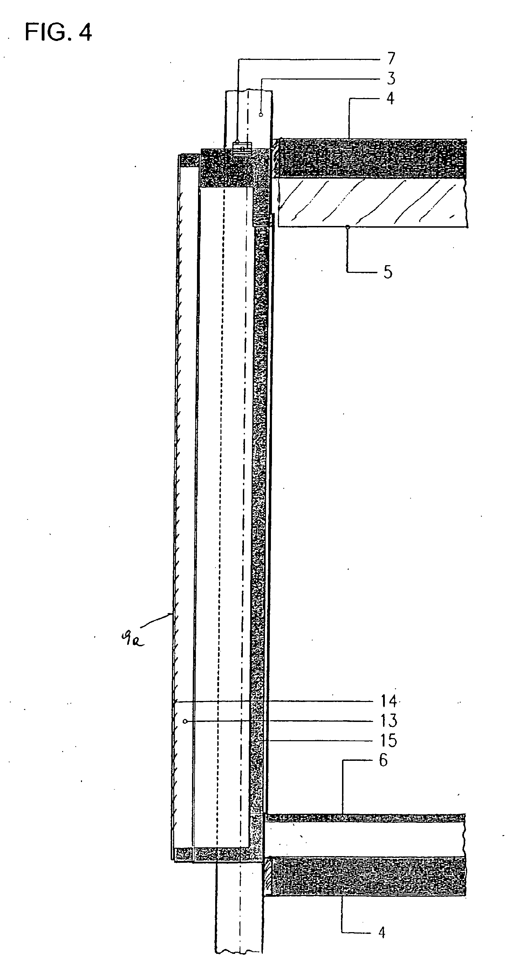

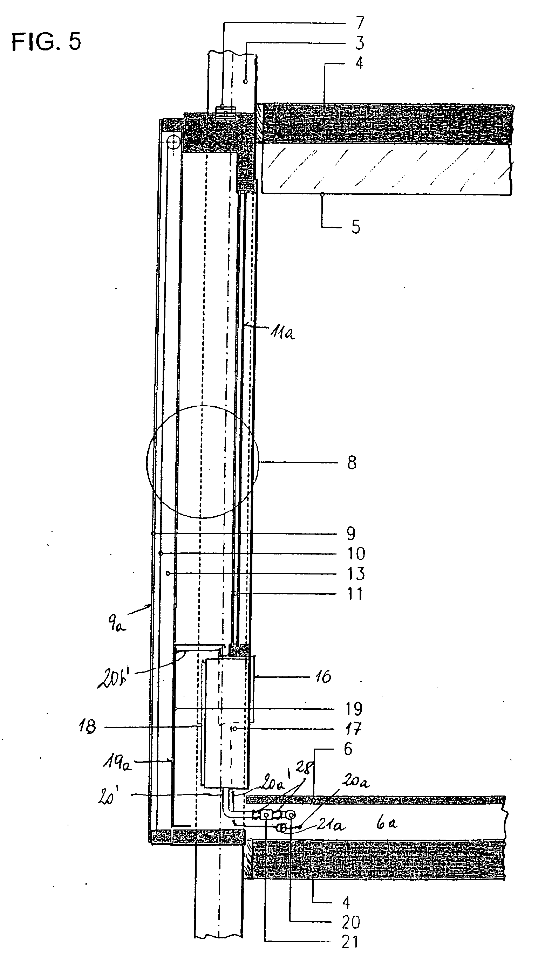

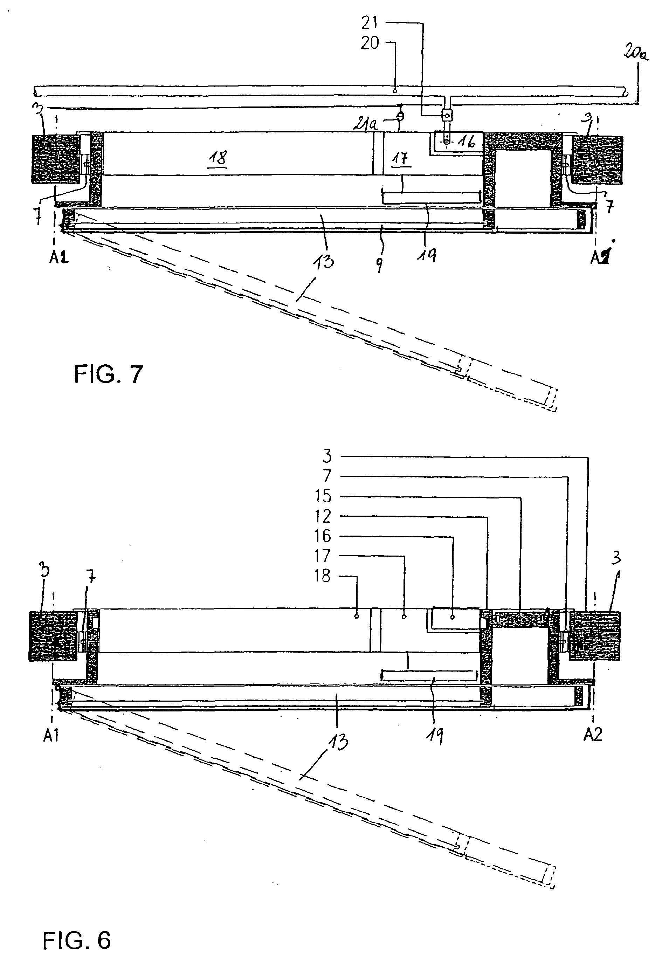

Das Fassadenelement nach Fig. 2 weist einen um Scharniere 13a schwenkbaren Aussenflügel 13 (vgl. Fig. 4, 6, 7) auf, der eine äussere Glasscheibe 9 (vgl. Fig. 5) trägt. Seitlich, rechts, dieses Fensters 9 befindet sich ein Lüftungsgitter 14, das ein dahinter gelegenes, schmales Fenster 15 (Fig. 3) abdeckt, welches nach Fig. 3 um Scharniere 15a schwenkbar ist. Damit wird dem Benützer des Raumes die Gelegenheit für den Einlass von Aussenluft gegeben. Natürlich muss diese Lüftungskonstruktion nicht unbedingt in der dargestellten Weise verwirklicht werden, da statt eines Fensters 15 auch eine Jalousie oder eine türartige Platte verwendet werden könnte, und es muss auch nicht unbedingt ein Lüftungsgitter 14 vorgesehen werden. Die Flächen 9 und 14 bilden somit die Aussenfläche 9a des Fassadenelementes 1 (Fig. 4, 5).

Wie besonders Fig. 5 verdeutlicht, ist das im Fassadenelement 1 vorgesehene Fenster als doppelwandiges Kastenfenster 8 mit einer Innenverglasung 11 ausgebildet. Diese Innenverglasung 11 bildet, zusammen mit den Gehäusewänden der darunter untergebrachten Geräte, die Innenfläche 11a des Fassadenelementes 1 (Fig. 5). An der von der Innenwandfläche 11a abgekehrten Seite, also im Inneren des Kastenfensters 8 und/oder an der Aussenfläche 9a, ist ein Sonnenschutz 10, beispielsweise ein von einem Wickel 10a abwickelbarer Sonnenschutzvorhang 10, untergebracht, der also gleichzeitig mit der Anbringung des Fassadenelementes 1 am Skelett 3, 4 montiert ist. Dieser Vorhang 10 kann gewünschtenfalls auch als Brandschutzvorhang aus temperaturbeständigem Material, wie einem Glasfasergewebe oder aus Keramikfasern, ausgebildet sein. Günstiger ist es jedoch, einen Wickel 10' (Fig. 2) mit einem Brandschutzvorhang an der Aussenfläche 9a, etwa am Rahmen für die Verglasung 9, anzubringen, denn damit wird den in einigen Ländern bestehenden Brandschutzbestimmungen besser und unter allen Umständen Genüge getan, denn im Brandfall halten Glasscheiben den Temperaturen nicht lange stand und platzen, worauf die Flammen nach oben schlagen und die jeweils obere Verglasung - mit demselben Effekt - erreichen. Dies wird durch einen äusseren Brandschutzvorhang verhindert. Der Wickel 10' ist in den Fig. 4 und 5 nicht dargestellt. Es versteht sich, dass die Position der Vorhänge 10 und 10' miteinander vertauscht werden können, d.h. dass der Sonnenschutzvorhang 10 an der Aussenfläche angebracht ist und der Brandschutzvorhang 10' innerhalb des doppelwandigen Kastenfensters, obwohl dies - schon wegen der zweckmässigen Abdeckung auch des Lüftungsgitters 14 - nicht bevorzugt sein wird. Auch versteht es sich, dass diese Vorhang-Einheiten in herkömmlicher Weise ausgebildet und beispielsweise in Gehäusen untergebracht sein können.

Um die Vorhänge 10, 10' zu betätigen, kann an sich eine manuell betätigbare Schnur vorgesehen sein, wie dies bekannt ist. Gerade ein Brandschutzvorhang 10' muss jedoch für Probealarme heruntergelassen und dann wieder aufgewickelt werden, zu welchem Zweck es vorteilhaft ist, innerhalb des Wickels 10' einen sogenannter Rohrmotor 10" vorzusehen. Dieser wird im allgemeinen durch einen Brandmelder bzw. über eine Mess-, Steuer- und Regeleinheit (MSR) 16 ausgelöst, um den Vorhang gebremst unter Gewichtseinfluss in an sich bekannter Weise herunterzulassen. Anderseits kann auch der Sonnenschutzvorhang 10 mittels eines Rohrmotors (der Wickelkern des Wickels 10' bzw. 10a bildet dabei den Aussenläufer des Motors) 10a betätigbar sein, weshalb er über eine Leitung 16a mit der Einheit 16 verbunden ist.

Wie Fig. 3 deutlich zeigt, weist die MSR 16 an der Innenfläche 11a ein Anzeigefeld 24, einen Wahlschalter 25 und Betätigungsschalter 26, 27 auf. Natürlich kann die Anordnung der Schalter beliebig geändert werden. Mittels des Wahlschalters 25 kann beispielsweise auf die Einstellung eines Sicherheitsprogrammes während der Abwesenheit der Bewohner des Raumes umgeschaltet werden, die Schalter 27 bestätigen dabei bei sequentieller Anzeige der Möglichkeiten auf dem Feld 24, ob ein gezeigter Programmschritt durchgeführt werden soll oder nicht (z.B. Betätigen des Motors 10a und der Jalousie 10, oder des Lichts oder eines Lautsprechers oder mehrerer davon), wobei der eine der Schalter 27 für die Bestätigung, der andere für die Löschung verantwortlich ist. Selbstverständlich sind auch andere Schaltungen möglich. Dagegen wird beim Umschalten mittels des Wahlschalters 25 das Raumklima geregelt, wobei die Einstellschalter 26 beispielsweise die Rolle von "Höher"- oder "Niedriger"-Schalter spielen.

Um beim Montieren eines Fassadenelementes 1 an das Gerüst 3, 4 gleich auch die Versorgung des MSR-Gerätes 16 sowie weiterer Geräte 17, 18 sicherzustellen, zeigt Fig. 5, dass das Fassadenelement 1 Kupplungen 21, 21a aufweist, die an die ortsfesten, beispielsweise im Hohlraum 6a, vorhandenen Versorgungsleitungen 20, 20a mittels entsprechenden Gegenelementen der Kupplungen 21, 21a angeschlossen werden können, so dass mit dem Einsetzen der Fassadenelemente 1 nicht nur der Bau im wesentlichen fertiggestellt ist, sondern auch die Installationen. Dabei handelt es sich bei den Geräten 17, 18 beispielsweise um Umluft- bzw. Raumluftgeräte, Luftbefeuchter, bzw. Heiz- und/oder Kühlgeräte (kurz Temperiergeräte), die untereinander oder nach aussen über im Fassadenelement vorgesehene Leitungen 20', 20a', 20b' und über die Kupplungen 20, 21a mit dem Hausnetz verbunden werden. Die Kupplungen 21 (für eine Fluidleitung) bzw. 21a (für eine elektrische Leitung) können jeder beliebigen, an sich bekannten Art sein.

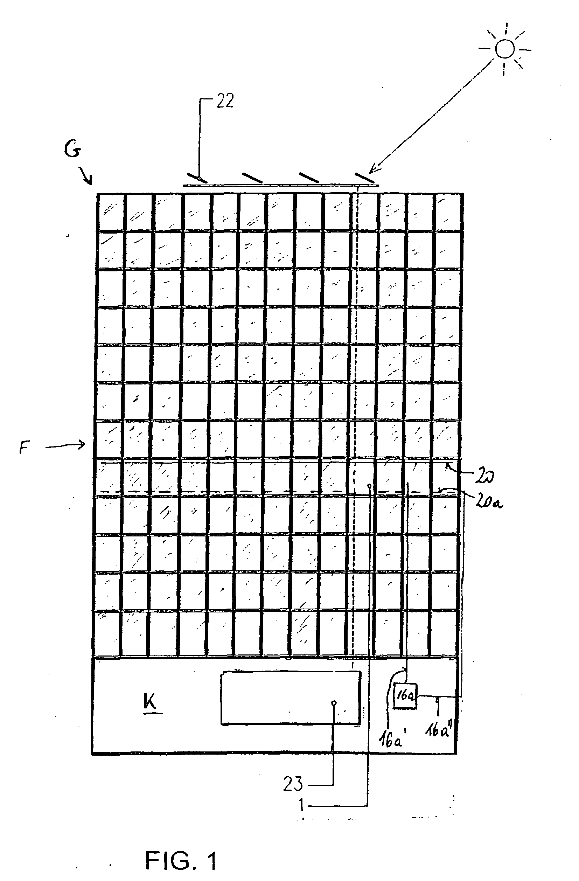

Gerade vielstöckige Gebäude G, wie es Fig. 1 zeigt, sind mehr oder minder grossen Bewegungen, besonders in Erdbebengebieten unterworfen. Damit einerseits solche Bewegungen anderseits allfällige Toleranzen, Wärmedehnungen etc. ausgeglichen werden können, ist es vorteilhaft, wenn wenigstens in einer der zur jeweiligen Kupplung 21, 21a führenden Leitungen 20' bzw. 20a' und/oder 20a, 21a ein nachgiebiges Ausgleichsstück 28 vorgesehen ist. Dieses Ausgleichsstück kann Teil der Kupplung 21 bzw. 21a (bevorzugt) und/oder von dieser etwas entfernt in der jeweiligen Leitung 20' bzw. 20a' und/oder 20a, 21a vorgesehen sein.

Ferner kann an der der Verglasung 9 zugekehrten Seite auch noch ein eine äussere Auffangfläche 19a für Sonnenlicht aufweisender Sonnenenergie-Wandler 19, wie Sonnenkollektor und/oder Sonnenzellen, Absorber bzw. Wärmetauscher vorgesehen sein, der dann direkt oder über das MSR-Gerät 16 über die jeweilige Kupplung 21 bzw. 21a mit dem Netz verbunden sein kann, beispielsweise auch mit den Sonnenkollektoren 22 und dem Speicher 23 (Fig. 1).

Fig. 4 ist ein Schnitt durch das Lüftungsfenster 15, wobei die Einzelheiten der Kupplungen und Leitungen weggelassen und der Fig. 5 zu entnehmen sind. Die abgehängte Decke 5 kann, wie schon an Hand der Fig. 2 erwähnt, entweder einen Hohlraum 5a begrenzen (bevorzugt) oder ist mit Isolationsmaterial für die Schall- und/oder Wärmeisolierung ausgefüllt.

Im Rahmen der Erfindung sind zahlreiche Varianten möglich; so wurde bereits gesagt, dass die Versorgungsleitungen 20, 20a, oder wenigstens eine davon, entlang der Fassadenelemente 1 verlaufen können, so dass sie über Kupplungen mit den jeweiligen Anschlüssen des jeweils benachbarten Fassadenelementes in Verbindung treten können. Ferner kann wenigstens eine Kupplung so vorgesehen werden, dass sie nach Wunsch an eine Einrichtung des Raumes, z.B. eine Stehlampe, einen Lüfter od.dgl. anschliessbar ist.

Ferner wäre es denkbar, Fassadenelemente mit eingebauten, über mindestens eine Kupplung an die Versorgung anschliessbaren Geräten (die der unterschiedlichsten Art sein können) ohne Fenster, nur als raumabschliessende Platten auszubilden aber diese Möglichkeit wird nicht beansprucht. Auch könnte das MSR-Gerät 16 zur Betätigung eines Motors für das Lüftungsfenster 15 ausgebildet sein, um eine periodische Raumlüftung bei längeren Abwesenheit der Bewohner durchzuführen. Im Falle der Ausbildung des Gerätes 19 als Sonnenkollektor kann ein etwaiger Energieüberschuss über die an die Kupplung 21 a angeschlossene Leitung 20a an einen Speicher 23 (Fig. 1) abgegeben werden, wobei diesem zweckmässig eine Verteileinrichtung zum Verteilen auf andere Verbraucher bzw. zur Ausübung einer Einweg-Ventilfunktion zugeordnet sein kann. Eine weitere Kupplung mag zwischen der zentralen MSR-Einheit 16a (Fig. 1) und der jeweiligen Raum-MSR-Einheit 16 vorgesehen werden, wie überhaupt klar ist, dass zwar hier nur zwei Versorgungsleitungen 20, 20a gezeigt sind, im Rahmen der Erfindung aber auch mehrere vorgesehen sein können. Auch versteht es sich, dass die Versorgungsleitungen 20, 20a zur Zufuhr von Energie bzw. eines Energieträgers dienen, doch sind auch andere Zufuhreinrichtungen möglich; beispielsweise kann über eine Kupplung eine raumseitig z.B. über ein Lüftungsgitter führende Umluftleitung an mindestens eines der Geräte 17 und/oder 18 anschliessen.

Zwar wurde oben die Erfindung an Hand eines Gebäudes G mit einer Vielzahl von durch Fassadenelemente abdeckbaren Matrizeneinheiten A1, A2 ... An beschrieben, doch versteht es sich, dass die Vorteile der Erfindung schon dann erreichbar sind, wenn nur wenigstens ein Fassadenelement in der erfindungsgemässen Weise ausgestattet ist.

## Patentansprüche

1. Gebäude (G) mit einer aus einzelnen Fassadenelementen (1) mit Aussenwandfläche (9a) und einer einem Raum zuzuwendenden Innenwand (11 a) zusammengesetzten Fassadenwand, wobei mindestens ein Teil der Fassadenelemente (1) wenigstens eine Leitung (20', 20a', 20b') aufweist, **dadurch gekennzeichnet, dass**
a) mindestens der Teil der Fassadenelemente (1), welcher wenigstens eine Leitung aufweist, mit einem sich zwischen zwei Geschossen erstreckenden, den jeweils dahinterliegenden Raum abdeckenden und deshalb mit wenigstens einem, insbesondere zu öffnenden, eine äussere Glasscheibe (9) und eine Innenverglasung (11) aufweisenden doppelwandigen Kastenfenster (8) zur Raumbeleuchtung ausgestattet ist,
b) dass innerhalb des Kastenfensters (8), unten, mindestens ein Temperiergerät (17, 18) vorgesehen ist,
c) und dass die wenigstens eine Leitung (20', 20a', 20b') am im wesentlichen geschosshohen Fassadenelement (1) mindestens eine, im Falle einer elektrischen Kupplung vorzugsweise mehrpolige, Kupplung (21, 21a) zum Anschluss mindestens des Temperiergerätes (17, 18) entweder an eine Leitung eines benachbarten im wesentlichen geschosshohen Fassadenelementes (1) oder eine Zufuhreinrichtung (20, 20a) und/oder eine raumseitige Einrichtung, insbesondere über wenigstens ein nachgiebiges Ausgleichstück (28) aufweist.

2. Gebäude (G) mit mindestens einem Fassadenelement (1) nach Anspruch 1, **dadurch gekennzeichnet, dass** die mindestens eine Leitung (20', 20a', 20b') des Fassadenelementes (1) über die Kupplung (21, 21a) mit einer im Gebäude (G) untergebrachten Mess- und Steuer- bzw. Regeleinheit (16a) verbunden ist.

3. Gebäude nach Anspruch 2, **dadurch gekennzeichnet, dass** die Mess- und Steuer- bzw. Regeleinheit (16a) jeweils über eine Leitung (16a', 16a") mit einer von mehreren Gruppen von Fassadenelementen (1) im wesentlichen gleicher Bedingungen verbunden ist.

4. Fassadenelement für ein Gebäude nach einem der vorhergehenden Ansprüche, mit einer Aussenwandfläche (9a) und einer einem Raum zuzuwendenden Innenwand (11a) zusammengesetzten Fassadenwand, sowie mit wenigstens einer Leitung (20', 20a', 20b'), **dadurch gekennzeichnet, dass**
a) es (1) mit einem sich zwischen zwei Geschossen zu erstreckenden, den jeweils dahinterliegenden Raum abzudeckenden und deshalb mit wenigstens einem, insbesondere zu öffnenden, eine äussere Glasscheibe (9) und eine lnnenverglasung (11) aufweisenden¹⁾ doppelwandigen Kastenfenster (8) zur Raumbeleuchtung ausgestattet ist,
b) dass innerhalb des Kastenfensters (8), unten, mindestens ein Temperiergerät (17, 18) vorgesehen ist,
c) und dass die wenigstens eine Leitung (20', 20a', 20b') am im wesentlichen geschosshohen Fassadenelement (1) mindestens eine, im Falle einer elektrischen Kupplung vorzugsweise mehrpolige, Kupplung (21, 21a) zum Anschluss mindestens des Temperiergerätes (17, 18) entweder an eine Leitung eines benachbarten im wesentlichen geschosshohen Fassadenelementes (1) oder eine Zufuhreinrichtung (20, 20a) und/oder eine raumseitige Einrichtung, insbesondere über wenigstens ein nachgiebiges Ausgleichstück (28) aufweist.

5. Fassadenelement nach Anspruch 4, **dadurch gekennzeichnet, dass** es mindestens einen Motor (10", 10a') für die Betätigung eines Sonnen- (10), Brand- (10') oder Blendschutzes und/oder für das zu öffnende Fenster (9, 11, 15) beinhaltet.

6. Fassadenelement nach Anspruch 4 oder 5, **dadurch gekennzeichnet, dass** es einen eine äussere Auffangfläche (19a) für Sonnenlicht aufweisenden Sonnenenergie-Wandler (19), wie Sonnenkollektor und/oder Sonnenzellen, aufweist, der an wenigstens eine der Leitungen (20b') angeschlossen ist, wobei bevorzugt eine Verteileinrichtung vorgesehen ist, um einen allfälligen Energieüberschuss über die mindestens eine Kupplung weiterzuverteilen.

7. Fassadenelement nach einem der Ansprüche 4 bis 6, **dadurch gekennzeichnet, dass** es wenigstens über einen Teil seiner Fläche doppelwandig (vgl. 8) mit einem Hohlraum ausgeführt ist, in dem die wenigstens eine Leitung (20', 20a', 20b') verläuft.

8. Fassadenelement nach einem der Ansprüche 4 bis 7, **dadurch gekennzeichnet, dass** die mindestens eine Leitung (20', 20a', 20b') wenigstens eine Fluidleitung (20') umfasst, wobei vorzugsweise diese Leitung (20') mit einer am Fassadenelement (1) angebrachten, beispielsweise ein Lüftungsgerät umfassenden, Temperiereinrichtung und/oder Feuchtigkeitsregeleinrichtung (17, 18) verbunden ist und insbesondere an einen am Fassadenelement (1) vorgesehenen Wärmetauscher (19) angeschlossen ist.

9. Fassadenelement nach einem der Ansprüche 4 bis 8, **dadurch gekennzeichnet, dass** die mindestens eine Leitung (20b') mit einer an der Innenwand (11a) des Fassadenelementes (1) angeordneten Einstelleinrichtung (16, 24-27) verbunden ist.

10. Fassadenelement nach einem der Ansprüche 4 bis 9, **dadurch gekennzeichnet, dass** die Leitung (16a) mit einer Sicherheitseinrichtung (10a) zum automatischen Betätigen mindestens eines Gerätes (10) verbindbar ist, und dazu an eine Einstelleinrichtung (16, 24-27) angeschlossen ist.

11. Fassadenelement nach einem der Ansprüche 4 bis 10, **dadurch gekennzeichnet, dass** an der von der Innenwandfläche (11a) abgekehrten Seite mindestens ein Brandschutzvorhang (10') angeordnet ist.

## Claims

1. Building (G) with a façade wall composed of individual façade elements (1) with an outer wall face (9a) and an inner wall (11 a) which is to face a room, wherein at least some of the façade elements (1) exhibit a cable (20', 20a', 20b'), **characterised in that**
a) at least those of the façade elements (1) which exhibit at least one cable are fitted with a double-walled box window (8) for room lighting, extending between two floors, covering the intervening room, and hence with at least one double-walled box window (8), in particular one to be opened and exhibiting an outer glass plate (9) and inner glazing (11),
b) **in that** at least one tempering unit (17, 18) is provided at the bottom inside the box window (8),
c) and **in that** at least one cable (20', 20a', 20b') exhibits, on the essentially floor high façade element (1), at least one coupling (21, 21a), in the case of an electrical coupling , preferably a multi-pole coupling, for connecting at least the tempering unit (17,18) either to a cable in the adjacent essentially floor-high façade element (18) or to a feed device (20, 20a) and/or a device on the room side, in particular by means of at least one flexible compensation plug (28).

2. Building (G) with at least one façade element (1) according to Claim 1, **characterised in that** at least one cable (20', 20a', 20b') of the façade element (1) is connected by the coupling (21, 21a) to a measuring and control or regulating unit (16a) installed in the building (G).

3. Building according to Claim 2, **characterised in that** the measuring and control or regulating unit (16a) are each connected by a cable (16a', 16a") to one of several groups of façade elements (1) under essentially the same conditions.

4. Façade element for a building according to one of the preceding claims, with a façade wall composed of an outer wall surface (9a) and an inner wall (11a) that is to face a room, as well as with at least one cable (20', 20a', 20 b'), **characterised in that**
a) it is fitted with a double-walled box window (8) for room lighting, which window is to extend between two floors, cover the intervening room, and is therefore fitted with at least one box window (8), particularly one to be opened and exhibiting an outer glass plate (9) and inner glazing (11),
b) **in that** at least one tempering unit (17, 18) is provided at the bottom inside the box window (8),
c) and **in that** at least one cable (20', 20a', 20b') on the essentially floor-high façade element (1) exhibits at least one coupling (21, 21a), in the case of an electrical coupling, preferably multi-pole, for connecting at least the tempering unit(17, 18) either to a cable in the adjacent essentially floor-high façade element (1) or a feed device (20, 20a) and/or a device on the room side, in particular by means of a flexible compensation plug (28).

5. Façade element according to Claim 4, **characterised in that** it incorporates at least one motor (10", 10') for actuating a sun (10), fire (10') protection or anti-dazzle device and/or for the window (9, 11, 15) to be opened.

6. Façade element according to Claim 4 or 5, **characterised in that** it exhibits a solar energy converter (19) exhibiting an outer collection surface (19a) for sunlight, such as solar collector and/or solar cells, which converter is connected to at least one of the cables (20b'), wherein a distributing device is preferably provided to distribute further any excess energy via at least one coupling.

7. Façade element according to one of Claims 4 to 6, **characterised in that** it is designed over part of its surface with a double wall (cf. 8) with a cavity in which runs at least one cable (20', 20a', 20b').

8. Façade element according to one of Claims 4 to 7, **characterised in that** at least one cable (20', 20a', 20b') incorporates at least one fluid cable (20'), wherein preferably this cable (20')is connected to a tempering device and/or moisture regulating device (17,18) fitted to the façade element (1), for example one incorporating a ventilating device, and is, in particular, connected to heat exchanger (19) provided on the façade element (1).

9. Façade element according to one of Claims 4 to 8, **characterised in that** at least one cable (20b') is connected to an adjusting device (16, 24-27) arranged on the inner wall (11a) of the façade element (1).

10. Façade element according to one of Claims 4 to 9, **characterised in that** the cable (16a) is connectable to a safety device (10a) for automatic actuation of at least one device (19), and is for this purpose connected to an adjusting device (16, 24-27).

11. Façade element according to one of Claims 4 to 10, **characterised in that** at least fireproof curtain (10') is arranged on the side facing away from the inner wall surface (11a).

## Revendications

1. Bâtiment (G) avec une paroi de façade, composée d'éléments de façade (1) individuels, ayant une face extérieure de paroi (9a) et une paroi intérieure (11a) tournée vers un espace, sachant qu'au moins une partie des éléments de façade (1) présente au moins une conduite ou ligne (20',20a',20b'), **caractérisé en ce qu'**
a) au moins une partie des éléments de façade, qui présente au moins une conduite ou ligne, est équipée, pour l'éclairement de l'espace, d'une fenêtre à caisse (8), s'étendant entre deux étages, couvrant l'espace se trouvant chaque fois derrière et, de ce fait, d'au moins une fenêtre à caisse (8) à double paroi, en particulier à ouvrir, présentant un panneau en verre (9) extérieur et un vitrage (11) intérieur,
b) **en ce que**, à l'intérieur de la fenêtre à caisse (8), est prévue en partie inférieure au moins un appareil de régulation (17,18),
c) et **en ce que** la au moins une conduite ou ligne (20',20a',20b') présente, sur un élément de façade (1) faisant sensiblement la hauteur d'un étage, au moins un accouplement (21,21a), de préférence à plusieurs pôles dans le cas d'un accouplement électrique, pour le raccordement d'au moins l'appareil de régulation (17,18), soit à une conduite ou ligne d'un élément de façade (1) voisin et sensiblement de la hauteur d'un étage, soit à un dispositif d'alimentation (20,20a) et/ou à un dispositif situé côté espace, en particulier par l'intermédiaire d'au moins une pièce de compensation (28) déformable.

2. Bâtiment (G) comprenant au moins un élément de façade (1) selon la revendication (1), **caractérisé en ce que** la au moins une conduite ou ligne (20', 20a', 20b') de l'élément de façade (1) est reliée, par l'intermédiaire de l'accouplement (21,21a), à une unité de mesure de commande ou de régulation (16a), logée dans le bâtiment (G).

3. Bâtiment selon la revendication 2, **caractérisé en ce que** l'unité de mesure et de commande ou de régulation (16a) est reliée, dans des conditions sensiblement identiques, par l'intermédiaire d'une conduite ou ligne (16a',16a"), à l'un parmi une pluralité de groupes d'éléments de façades.

4. Elément de façade pour un bâtiment selon l'une des revendications précédentes, avec une paroi de façade composée d'une face extérieure de paroi (9a) et d'une paroi intérieure (11a) tournée vers un espace, ainsi qu'avec au moins une ligne ou conduite (20',20a',20b'), **caractérisé en ce que**
a) l'élément de façade (1) est équipé, pour l'éclairement de l'espace, d'une fenêtre à caisse (8), s'étendant entre deux étages, couvrant l'espace se trouvant chaque fois derrière et, de ce fait, d'au moins une fenêtre à caisse (8) à double paroi, en particulier à ouvrir, présentant un panneau en verre (9) extérieur et un vitrage (11) intérieur,
b) à l'intérieur de la fenêtre à caisse (8) est prévu en partie inférieure au moins un appareil de régulation (17,18)
c) et **en ce que** la au moins une conduite ou ligne (20' ,20a' ,20b') présente, sur un élément de façade (1) faisant sensiblement la hauteur d'un étage, au moins un accouplement (21,21a), de préférence à plusieurs pôles dans le cas d'un accouplement électrique, pour le raccordement d'au moins l'appareil de régulation (17,18), soit à une conduite ou ligne d'un élément de façade (1) voisin et sensiblement de la hauteur d'un étage, soit à un dispositif d'alimentation (20,20a) et/ou à un dispositif situé côté espace, en particulier par l'intermédiaire d'au moins une pièce de compensation (28) déformable.

5. Elément de façade selon la revendication 4 **caractérisé en ce qu'**il contient au moins un moteur (10",10a') sur l'actionnement d'une protection solaire (10), pare-feu (10') ou d'occultation et/ou pour la fenêtre (9,11,15) à ouvrir.

6. Elément de façade selon la revendication 4 ou 5 **caractérisé en ce qu'**il présente un convertisseur d'énergie solaire (19), présentant une face de captage extérieure (19a) pour la lumière solaire, tel qu'un collecteur solaire et/ou des piles solaires, raccordées à au moins l'une des conduites ou lignes (20b'), sachant que, de préférence, est prévu un dispositif de distribution, pour retransmettre et distribuer un éventuel excès d'énergie par le au moins un accouplement.

7. Elément de façade selon l'une des revendications 4 à 6, **caractérisé en ce qu'**il est réalisé, au moins sur une partie de sa surface, avec une paroi double (voir 8), comprenant un espace creux, dans lequel s'étend la au moins une conduite ou ligne (20' ,20a' ,20b') .

8. Elément de façade selon l'une des revendications 4 à 7, **caractérisé en ce que** la au moins une conduite ou ligne (20' 20a', 20b') comprend au moins une conduite à fluide (20'), sachant que, de préférence, cette conduite (20') est reliée à un dispositif de régulation monté sur l'élément de façade (1), par exemple comprenant un appareil d'aération, et/ou est relié à un dispositif de régulation de l'humidité (17,18) et, en particulier, est raccordé à un échangeur de chaleur (19), prévu sur l'élément de façade (1).

9. Elément de façade selon l'une des revendications 4 à 8, **caractérisé en ce que** la au moins une conduite (20b') est reliée à un dispositif de réglage (16,24 à 27), disposé sur la paroi intérieure (11a) de l'élément de façade (1).

10. Elément de façade selon l'une des revendications 4 à 9, **caractérisé en ce que** la ligne (16a) est susceptible d'être relié à un dispositif de sécurité (10a), pour l'actionnement automatique d'au moins un appareil (10) et, de plus, est raccordé à un dispositif de réglage (16, 24 à 27).

11. Elément de façade selon l'une des revendications 4 à 10, **caractérisé en ce qu'**au moins un rideau coupe-feu (10') est disposé sur la face opposée à la face intérieure de paroi (11a).
